# EUROPEAN PATENT APPLICATION

(11) **EP 4 675 475 A1**
(43) Date of publication of application: **07.01.2026**
(21) Application number: 24769916.8
(22) Date of filing: 12.03.2024
(51) Int. Cl.: G06F 21/57

(54) **HARDWARE ROOT OF TRUST AGENT INTERACTION METHOD BASED ON SECURITY VIRTUALIZATION AND NETWORK DEVICE**

(30) Priority: 16.03.2023 CN 202310316371
(71) Applicant: HUAWEI TECHNOLOGIES CO., LTD., Shenzhen, Guangdong 518129 (CN)
(72) Inventor: ZHU, Shaofeng, Shenzhen, Guangdong 518129 (CN); ZHANG, Xiaohu, Shenzhen, Guangdong 518129 (CN); ZHANG, Qinglong, Shenzhen, Guangdong 518129 (CN)
(74) Representative: Maiwald GmbH
(86) International application number: PCT/CN2024/081073
(87) International publication number: WO 2024/188223

(57) **Abstract**

A hardware root of trust agent interaction method based on secure virtualization is disclosed, and the method is performed by a network device. The network device includes a main service processor and a hardware root of trust. The main service processor includes a hardware root of trust agent program, a hardware root of trust driver program, and a trusted execution environment manager. The hardware root of trust agent is managed by the trusted execution environment manager. After receiving an invoking request instruction of the hardware root of trust, the hardware root of trust agent generates an invoking request instruction that is of the hardware root of trust and that is identifiable by the hardware root of trust driver. In this way, the hardware root of trust agent does not need to include a trusted execution environment operating system, and a trusted base of the hardware root of trust agent has a small code scale, a small attack surface, and high security. The hardware root of trust agent does not need to be bound with the trusted execution environment operating system for delivery, deployment, and authentication, so that costs of the hardware root of trust agent are reduced and the deployment is more flexible.

## Description

This application claims priority to Chinese Patent Application No. 202310316371.X, filed with the China National Intellectual Property Administration on March 16, 2023 and entitled "HARDWARE ROOT OF TRUST AGENT INTERACTION METHOD BASED ON SECURE VIRTUALIZATION AND NETWORK DEVICE", which is incorporated herein by reference in its entirety.

### TECHNICAL FIELD

The present invention relates to the field of data security technologies, and in particular, to a hardware root of trust agent interaction method based on secure virtualization and a network device.

### BACKGROUND

Processors of existing computers gradually support a security architecture, and may perform security operations, for example, process sensitive data and perform sensitive computing. A trusted execution environment (trusted execution environment, TEE) system architecture is one of mainstream processor security architectures. An existing processor based on the TEE system architecture has low security, and cannot process a high-security operation.

### SUMMARY

To resolve the foregoing problem, embodiments of this application provide a hardware root of trust agent interaction method based on secure virtualization. A HRoT driver may be constructed as an independent TEE to implement isolation from another component. A HRoT driver TEE is isolated from a manager TEE manager of the HRoT driver TEE at a privilege level. The TEE manager manages and controls permission of the HRoT driver TEE, for example, address space access permission. A HRoT has only permission granted by the TEE manager, and does not pose a threat to another component due to excessive permission. The HRoT driver has minimum permission, and is isolated from another component in a system. This ensures that a security threat is not posed to the another component in the system when the HRoT driver has its own vulnerabilities or is attacked. In addition, this application further provides a network device corresponding to the hardware root of trust agent interaction method based on secure virtualization.

Therefore, the following technical solutions are used in embodiments of this application.

According to a first aspect, an embodiment of this application provides a hardware root of trust agent interaction method based on secure virtualization. The method is performed by a network device. The network device includes a main service processor and a hardware root of trust, and the main service processor includes a hardware root of trust agent program, a hardware root of trust driver program, and a trusted execution environment manager. The method includes: The trusted execution environment manager receives a first invoking request instruction, and forwards the first invoking request instruction to the hardware root of trust agent program, where the first invoking request instruction is used to invoke the hardware root of trust, and the trusted execution environment manager is configured to manage the hardware root of trust agent program and the hardware root of trust driver program; the hardware root of trust agent program constructs a second invoking request instruction based on the first invoking request instruction, and forwards the second invoking request instruction to the hardware root of trust driver program, where the second invoking request instruction is an instruction that is of a specific data structure and that is identifiable by the hardware root of trust driver program; and the hardware root of trust driver program sends a drive instruction to the hardware root of trust based on the second invoking request instruction, where the drive instruction instructs the hardware root of trust to perform a high-security operation.

In this implementation, the hardware root of trust agent is managed by the trusted execution environment manager. After receiving an invoking request instruction of the hardware root of trust, the hardware root of trust agent generates an invoking request instruction that is of the hardware root of trust and that is identifiable by the hardware root of trust driver. In this way, the hardware root of trust agent does not need to include a trusted execution environment operating system, and a trusted base of the hardware root of trust agent has a small code scale, a small attack surface, and high security. The hardware root of trust agent does not need to be bound with the trusted execution environment operating system for delivery, deployment, and authentication, so that costs of the hardware root of trust agent are reduced and the deployment is more flexible.

In an implementation, before the trusted execution environment manager receives the first invoking request instruction, and forwards the first invoking request instruction to the hardware root of trust agent program, the method further includes: An application and/or an operating system of a normal world of the main service processor generates the first invoking request instruction, and sends the first invoking request instruction to the trusted execution environment manager; and/or a trusted program of a secure world of the main service processor generates the first invoking request instruction, and sends the first invoking request instruction to the trusted execution environment manager.

In an implementation, that the hardware root of trust agent program constructs the second invoking request instruction based on the first invoking request instruction specifically includes: The hardware root of trust agent program detects legality of the first invoking request instruction; and in response to that the first invoking request instruction is a legal instruction, the hardware root of trust agent program constructs the second invoking request instruction based on the first invoking request instruction.

In this implementation, the hardware root of trust agent program checks legality or permission of the invoking request instruction of the hardware root of trust. This may prevent a program of the normal world from sending an illegal hardware root of trust operation request, for example, reading a key.

In an implementation, that the hardware root of trust driver program sends the drive instruction to the hardware root of trust based on the second invoking request instruction specifically includes: The hardware root of trust driver program receives the second invoking request instruction, and transmits the second invoking request instruction to a queue of an output port of the hardware root of trust driver program; and when determining that the second invoking request instruction is output in the queue of the output port, the hardware root of trust driver program forwards the drive instruction corresponding to the second invoking request instruction.

In this implementation, the hardware root of trust driver program may have a plurality of programs that send requests for invoking the hardware root of trust. The hardware root of trust driver program may set an output queue on the output port, may temporarily store invoking request instructions, and send the invoking request instructions to the hardware root of trust in sequence, so that a case in which two invoking request instructions preempt the hardware root of trust at the same time can be avoided.

In an implementation, the hardware root of trust agent program is an independent trusted execution environment program managed by the trusted execution environment manager.

In this implementation, the hardware root of trust agent program is constructed as the independent trusted execution environment program managed by the trusted execution environment manager. The hardware root of trust agent program does not depend on the trusted execution environment operating system, and may support an invoking request instruction of a hardware root of trust in a program (for example, an application or an operating system) of the normal world, another trusted execution environment program, a trusted application and a trusted execution environment operating system program in the another trusted execution environment, and the like. Trusted base code of the hardware root of trust agent does not include the trusted execution environment operating system, and a lightweight trusted execution environment manager is used as a trusted base, so that a scale of the trusted base is reduced. The trusted base of the hardware root of trust agent has a small code scale, a small attack surface, and high security.

In an implementation, the hardware root of trust driver program is an independent trusted execution environment program managed by the trusted execution environment manager.

In this implementation, the hardware root of trust driver program is constructed as the independent trusted execution environment program managed by the trusted execution environment manager. The hardware root of trust driver does not depend on the trusted execution environment operating system, and is isolated from another component in a system. The hardware root of trust driver program has minimum permission and is isolated from the another component in the system. This ensures that a security threat is not posed to the another component in the system when the hardware root of trust driver program has its own vulnerabilities or is attacked.

According to a second aspect, an embodiment of this application provides a network device, including a main service processor and a hardware root of trust. The main service processor includes a hardware root of trust agent program, a hardware root of trust driver program, and a trusted execution environment manager. The trusted execution environment manager is configured to: receive a first invoking request instruction, and forward the first invoking request instruction to the hardware root of trust agent program. The first invoking request instruction is used to invoke the hardware root of trust, and the trusted execution environment manager is configured to manage the hardware root of trust agent program and the hardware root of trust driver program. The hardware root of trust agent program is configured to: construct a second invoking request instruction based on the first invoking request instruction, and forward the second invoking request instruction to the hardware root of trust driver program. The second invoking request instruction is an instruction that is of a specific data structure and that is identifiable by the hardware root of trust driver program. The hardware root of trust driver program is configured to send a drive instruction to the hardware root of trust based on the second invoking request instruction. The drive instruction instructs the hardware root of trust to perform a high-security operation.

In an implementation, the main service processor is configured to: send the first invoking request instruction generated by an application and/or an operating system of a normal world to the trusted execution environment manager; and/or send the first invoking request instruction generated by a trusted program of a secure world to the trusted execution environment manager.

In an implementation, the hardware root of trust agent program is specifically configured to: detect legality of the first invoking request instruction; and in response to that the first invoking request instruction is a legal instruction, construct the second invoking request instruction based on the first invoking request instruction.

In an implementation, the hardware root of trust driver program is specifically configured to: receive the second invoking request instruction, and transmit the second invoking request instruction to a queue of an output port of the hardware root of trust driver program; and
when determining that the second invoking request instruction is output in the queue of the output port, forward the drive instruction corresponding to the second invoking request instruction.

In an implementation, the hardware root of trust agent program is an independent trusted execution environment program managed by the trusted execution environment manager.

In an implementation, the hardware root of trust driver program is an independent trusted execution environment program managed by the trusted execution environment manager.

According to a third aspect, an embodiment of this application provides a network device, including a main service processor and a hardware security module. The main service processor is used in a secure virtualization system at a secure-exception level 2, and the main service processor includes a hardware security module agent program, a hardware security module driver program, and a secure partition manager. The secure partition manager is configured to: receive a first invoking request instruction, and forward the first invoking request instruction to the hardware security module agent program. The first invoking request instruction is used to invoke the hardware security module, and the secure partition manager is configured to manage the hardware security module agent program and the hardware security module driver program. The hardware security module agent program is configured to: construct a second invoking request instruction based on the first invoking request instruction, and forward the second invoking request instruction to the hardware security module driver program. The second invoking request instruction is an instruction that is of a specific data structure and that is identifiable by the hardware security module driver program. The hardware security module driver program is configured to send a drive instruction to the hardware security module based on the second invoking request instruction. The drive instruction instructs the hardware security module to perform a high-security operation.

According to a fourth aspect, an embodiment of this application provides a network device, including a main service processor and a hardware security module. The main service processor is used in a trusted domain extension secure virtualization system, and the main service processor includes a hardware security module agent program, a hardware security module driver program, and a trusted domain extension module. The trusted domain extension module is configured to: receive a first invoking request instruction, and forward the first invoking request instruction to the hardware security module agent program. The first invoking request instruction is used to invoke the hardware security module, and the trusted domain extension module is configured to manage the hardware security module agent program and the hardware security module driver program. The hardware security module agent program is configured to: construct a second invoking request instruction based on the first invoking request instruction, and forward the second invoking request instruction to the hardware security module driver program. The second invoking request instruction is an instruction that is of a specific data structure and that is identifiable by the hardware security module driver program. The hardware security module driver program is configured to send a drive instruction to the hardware security module based on the second invoking request instruction. The drive instruction instructs the hardware security module to perform a high-security operation.

According to a fifth aspect, an embodiment of this application provides a network device, including at least one memory and at least one processor. The at least one processor is configured to execute instructions stored in the at least one memory, so that the processor performs the method according to the possible implementations of the first aspect.

According to a sixth aspect, this application provides a computer-readable storage medium. The computer-readable storage medium stores a computer program. When the computer program is executed in a computer, the computer is enabled to perform the method according to the possible implementations of the first aspect.

According to a seventh aspect, this application provides a computer program product. The computer program product stores instructions. When the instructions are executed by a computer, the computer is enabled to implement the method according to the possible implementations of the first aspect.

### BRIEF DESCRIPTION OF DRAWINGS

The following briefly introduces the accompanying drawings required for describing the embodiments or the prior art.
FIG. 1 is a diagram of an existing processor TEE system architecture;
FIG. 2 is a schematic flowchart of interaction between an existing main service processor and a HRoT;
FIG. 3 is a diagram of an architecture of a network device according to an embodiment of this application;
FIG. 4 is a diagram of an architecture of a hardware root of trust agent interaction method that is based on secure virtualization and that is run on a main service processor according to an embodiment of this application;
FIG. 5 is a flowchart of a hardware root of trust agent interaction method based on secure virtualization according to an embodiment of this application;
FIG. 6 is a diagram of an architecture of a network device in an Arm S-EL2 secure virtualization system according to an embodiment of this application;
FIG. 7A and FIG. 7B are a flowchart of performing a hardware root of trust agent interaction method based on secure virtualization by a network device according to an embodiment of this application;
FIG. 8 is a diagram of an architecture of a network device in an Intel TDX secure virtualization system according to an embodiment of this application;
FIG. 9 is a diagram of a structure of a network device according to an embodiment of this application;
FIG. 10 is a diagram of an architecture of a data center according to an embodiment of this application; and
FIG. 11 is a diagram of an architecture of another data center according to an embodiment of this application.

### DESCRIPTION OF EMBODIMENTS

The following describes the technical solutions in embodiments of this application with reference to the accompanying drawings in embodiments of this application.

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this application, the terms "first", "second", and the like are intended to distinguish between different objects, but do not indicate a particular order of the objects. For example, a first response message, a second response message, and the like are used to distinguish between different response messages, but do not indicate a particular order of the response messages.

In embodiments of this application, the word such as "example" or "for example" is used to give an example, an illustration, or a description. Any embodiment or design scheme described as an "example" or "for example" in embodiments of this application should not be explained as being more preferred or having more advantages than another embodiment or design scheme. To be precise, use of the word such as "example" or "for example" is intended to present a relative concept in a specific manner.

In the descriptions of embodiments of this application, unless otherwise specified, "a plurality of" means two or more. For example, a plurality of processing units are two or more processing units, and a plurality of elements are two or more elements.

Processors of existing computers gradually support a security architecture, and may perform security operations, for example, process sensitive data and perform sensitive computing. A trusted execution environment (trusted execution environment, TEE) system architecture is one of mainstream processor security architectures.

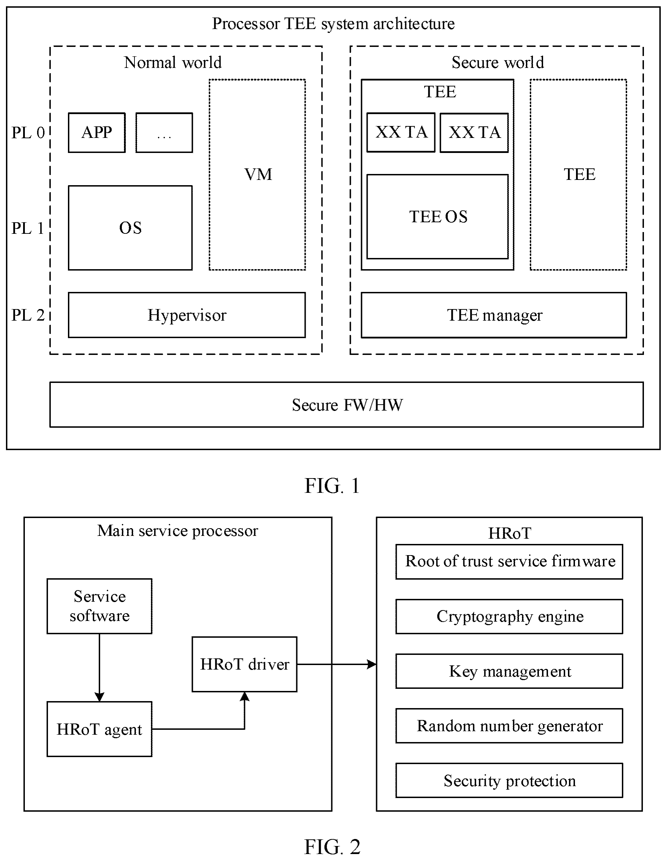

FIG. 1 is a diagram of an existing processor TEE system architecture. As shown in FIG. 1, the processor TEE system architecture may be divided into a normal world (normal world) and a secure world (secure world). The normal world runs in a non-secure (non-secure) environment, and deploys a program closely related to an application scenario of a processor. The secure world runs in a secure (secure) environment, and deploys a program related to a security operation. The normal world and the secure world may time-share a processor, so that the processor can perform switchover between the normal world and the secure world to perform security and non-security operations. Physical resources such as memories and peripherals running in the normal world and the secure world are isolated from each other.

The processor TEE system architecture may be divided into a PL 0, a PL 1, and a PL 2 by privilege level (privilege level, PL) of the processor. The PL 0 is a user mode, and may run an application (application, APP), a trusted application (trusted application, TA), or another program. The PL 1 is a superuser (supervisor) mode, and may run an operating system (operating system, OS), a TEE OS, or another program. The PL 2 is a virtual machine monitor (hypervisor) mode, and may run a hypervisor, a TEE manager (manager), or another program.

In the normal world, the APP is usually located at a PL 0 of the normal world, and is a program responsible for executing a service function. The OS is usually located at the PL 1 of the normal world, and is responsible for managing each APP, providing a system service for the APP, and the like. When the normal world supports virtualization, the hypervisor can be implemented at the PL 2 and a plurality of virtual machines (virtual machines, VMs) can be deployed. An OS and APPs can be deployed on each VM. The hypervisor is usually located at the PL 2 of the normal world, and is responsible for managing each VM.

In the secure world, the TA is usually located at the PL 0 of the secure world, and is a program responsible for executing a security function. The TEE OS is usually located at the PL 1 of the secure world, and is responsible for managing each TA, providing a system service for the TA, and the like. When the secure world supports virtualization, the TEE manager can be implemented at a high privilege level (for example, the PL 2) of the secure world, and a plurality of TEEs can be deployed. A TEE OS and APPs can be deployed in each TEE. The TEE manager is usually located in the secure world, may be deployed at a high privilege level (for example, the PL 2), and is responsible for managing each TEE.

Secure firmware/hardware (secure firmware/hardware, secure FW/HW) is at a highest privilege level, and is a part of a trusted base. The secure FW is responsible for secure loading and secure booting of a system, and provides a low-layer firmware service or the like. The secure HW includes a central processing unit (central processing unit, CPU), a hardware accelerator, a unique key of a hardware device, and the like.

To improve security of a security operation of a processor of a computer, the computer may adopt an architecture of synergy of a main service processor and a hardware root of trust (hardware root of trust, HRoT). The main service processor is configured to perform a large number of service-related operations. The HRoT mainly performs high-security operations related to sensitive information, for example, a cryptography operation and key certificate management.

The HRoT may include root of trust service firmware, a hardware cryptography engine, a hardware random number generator, a hardware key management module, a hardware security protection mechanism, and the like, and may be independently run in the root of trust service firmware. The HRoT is physically isolated from the main service processor, and can provide higher security than the TEE, for example, side-channel attack resistance and fault injection attack resistance. The HRoT may be integrated, external, or in another manner, and exists in a form of a coprocessor, a microprocessor (microcontroller unit, MCU), or the like. For example, the HRoT may be a hardware security module (hardware security module, HSM), a trusted platform module (trusted platform module, TPM), a trusted cryptography module (trusted cryptography module, TCM), or a trusted platform control module (trusted platform control module, TPCM).

FIG. 2 is a schematic flowchart of interaction between an existing main service processor and a HRoT. As shown in FIG. 2, the main service processor may run a HRoT agent (HRoT Agent) program and a HRoT driver (HRoT Driver) program, to implement interaction between the main service processor and the HRoT. Details are as follows.

Firstly, service software of the main service processor sends a HRoT invoking request instruction to the HRoT agent program. Secondly, after detecting the HRoT invoking request instruction, the HRoT agent program sends a HRoT invoking request instruction that is identifiable to the HRoT driver program. Then, the HRoT driver program generates a drive instruction based on the HRoT invoking request instruction that is identifiable by the driver, and allows the drive instruction to access the HRoT. Finally, the HRoT receives the drive instruction and performs a corresponding high-security operation.

The HRoT agent program and the HRoT driver program are programs that directly interact with the HRoT. To ensure security and reliability, a trusted base on which the program depends needs to implement a minimum code scale to ensure a smallest attack surface and highest security. To ensure security and reliability, the program needs to be isolated from another component in a system, and permission of the program needs to be minimized, to ensure a minimum security threat to the system when the program is attacked or has its own vulnerabilities. To implement collaborative deployment, delivery, and authentication with the HRoT at lowest costs, dependency on the another component needs to be minimized.

In an existing TEE TA-based HRoT agent program interaction solution, the HRoT agent is implemented as a TA managed by a TEE OS, and the HRoT driver is implemented at a PL 1 and a TEE OS layer of the secure world. However, a trusted base of the HRoT agent includes a TEE OS. As a result, a code scale of the trusted base is large, and consequently an attack surface of the HRoT agent is large, and security cannot be ensured. The HRoT agent depends on the TEE OS and is managed by the TEE OS. Therefore, the HRoT agent and the HRoT need to be bound with the TEE OS for delivery, deployment, and authentication. As a result, the HRoT agent is costly. The HRoT driver is not isolated from the TEE OS, has all permission of the PL 1 privilege level of the secure world, and can access address spaces of the normal world and the secure world. As a result, the HRoT driver has excessive permission.

To resolve a defect of the existing TEE TA-based HRoT agent program interaction solution, embodiments of this application provide a hardware root of trust agent interaction method based on secure virtualization and a network device.

A HRoT agent is constructed as an independent TEE program managed by a TEE manager, and may be referred to as a HRoT agent TEE, for example, in a form of FW. A HRoT agent TEE does not depend on a TEE OS, and may support a HRoT invoking request instruction of a program (for example, an APP or an OS) of a normal world, another TEE program, a TA and a TEE OS program in another TEE, and the like. A HRoT driver is constructed as an independent TEE program managed by the TEE manager, and may be referred to as a HRoT driver TEE, for example, in a form of FW. A HRoT driver TEE does not depend on the TEE OS, and is isolated from another component in a system. A privilege level is separated from the TEE manager, so that the TEE manager can manage permission of the privilege level, for example, manage address space access permission. The TEE manager implements a HRoT invoking request instruction/request instruction forwarding function, a HRoT agent TEE/HRoT driver TEE management function (for example, lifecycle management), and a HRoT agent TEE/HRoT driver TEE permission control function (for example, address space access permission).

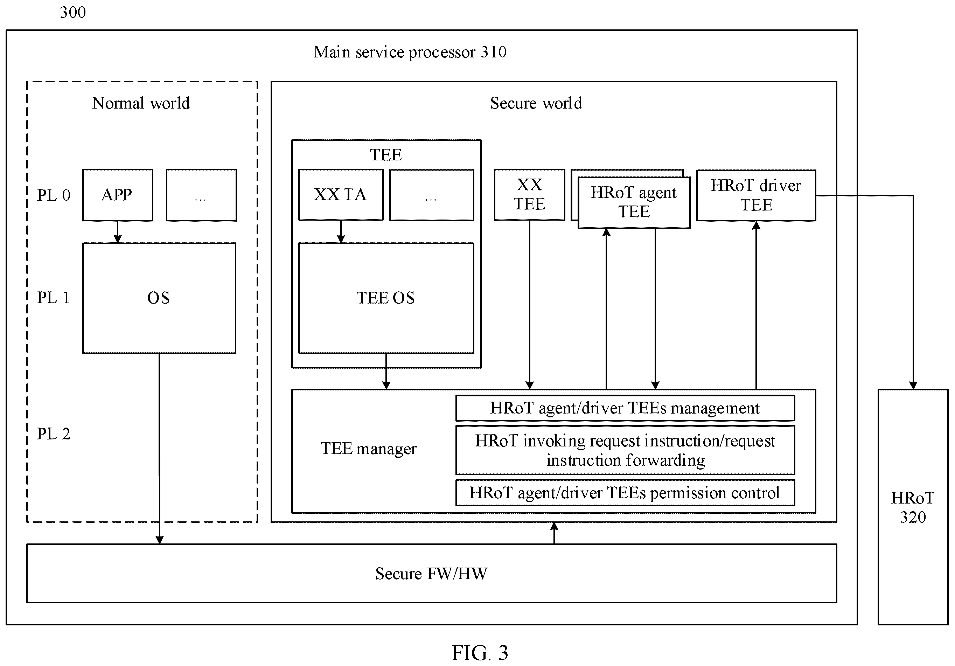

FIG. 3 is a diagram of an architecture of a network device according to an embodiment of this application. As shown in FIG. 3, the network device 300 includes a main service processor 310 and a HRoT 320. The main service processor 310 includes a normal world, a secure world, and secure FW/HW. The normal world includes a plurality of APPs and an OS. The secure world includes a plurality of TEEs, a HRoT agent TEE, a HRoT driver TEE, and a TEE manager. In the secure world, the TEE manager at a high privilege level (for example, a PL 2) manages the plurality of TEEs. Address spaces of the TEEs are isolated from each other. A TA and a TEE OS or independent TEE FW may be deployed and run in the TEE.

The main service processor 310 may construct a HRoT agent as a program that is deployed and run in an independent TEE environment. The HRoT agent may be referred to as a HRoT agent TEE, for example, in a form of FW. The HRoT agent TEE does not depend on the TEE OS. A privilege level may be a PL 0, a PL 1, or another privilege level of the secure world. Deployment of a plurality of HRoT agent TEE instances is supported.

The HRoT agent TEE may receive HRoT invoking request instructions from a program (for example, an APP or an OS) of the normal world, and a TA program, a TEE OS program, and another independent TEE program of the secure world. The HRoT agent TEE may further process the HRoT invoking request instruction, for example, perform legality check on validity and permission of the HRoT invoking request instruction. The HRoT agent TEE may construct a HRoT invoking request instruction that is of a specific data structure and that is identifiable by a HRoT driver, and send the HRoT invoking request instruction that is identifiable.

The main service processor 310 may construct the HRoT driver as a program that is deployed and run in an independent TEE environment. The HRoT driver may be referred to as a HRoT driver TEE, for example, in a form of FW. The HRoT driver TEE does not depend on the TEE OS. The HRoT driver TEE is isolated from another component in the system, and is managed by the TEE manager. For example, the TEE manager manages a lifecycle of the HRoT driver TEE. The HRoT driver TEE is isolated from the TEE manager at the privilege level. Address access permission or the like is managed and controlled by the TEE manager.

As a common component for a plurality of HRoT agent instances to access, the HRoT driver may receive the HRoT invoking request instruction that is identifiable. The HRoT driver may maintain a queue of HRoT invoking request instructions that are identifiable, and send a drive instruction to the HRoT 320 based on the queue. The HRoT driver may have a plurality of programs that send requests for invoking the HRoT. The HRoT driver may set an output queue on an output port, may temporarily store invoking request instructions, and send the invoking request instructions to the HRoT 320 in sequence, so that a case in which two invoking request instructions preempt the HRoT 320 at the same time can be avoided.

The TEE manager is equivalent to a lightweight secure world hypervisor. The TEE manager may implement management functions for the HRoT agent TEE and the HRoT driver TEE, for example, the management functions such as initialization, interruption, recovery, and stopping. The TEE manager may implement a function of controlling permission (including address space access permission and the like) of the HRoT agent TEE and the HRoT driver TEE. The TEE manager may implement a function of forwarding a HRoT invoking request instruction from a program of the normal world or another TEE program to the HRoT agent TEE. The TEE manager may implement a function of forwarding a HRoT invoking request instruction from the HRoT agent TEE to the HRoT driver TEE.

The HRoT 320 receives the drive instruction from the HRoT driver TEE, and performs a requested operation based on the command, for example, cryptography calculation, key certificate management, or secret information storage.

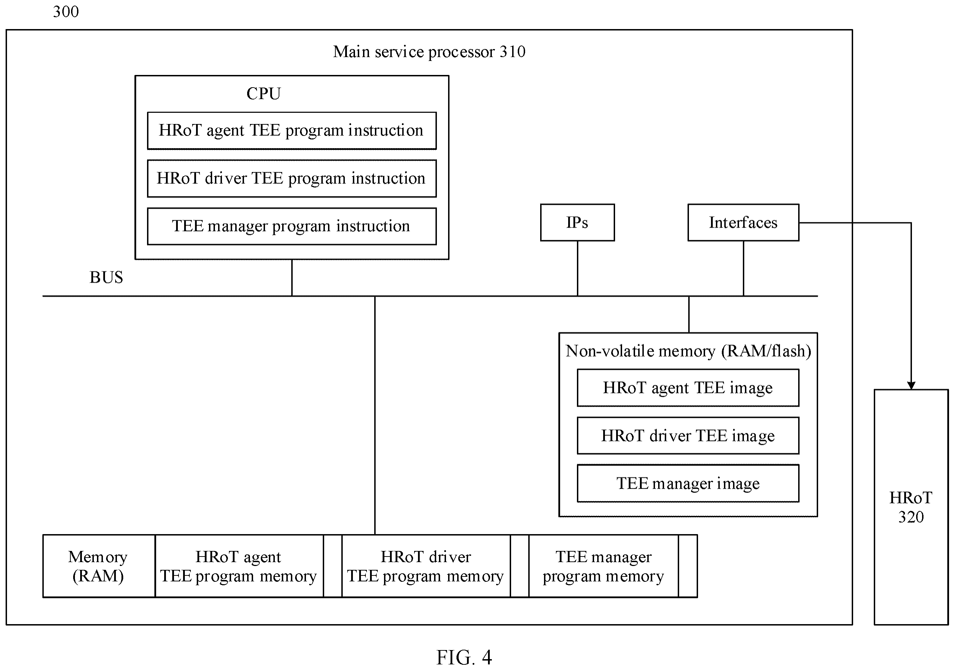

As shown in FIG. 4, the hardware root of trust agent interaction method based on secure virtualization is performed by software running on the main service processor 310. The main service processor 310 may be divided into HRoT agent TEE program software, HRoT driver TEE program software, and TEE manager program software based on functions executed by the main service processor 310. Before the main service processor 310 is started, the three program software may be stored in a non-volatile memory (non-volatile memory) such as a read only memory (read only memory, ROM) or a flash in a form of a TEE image, a TEE manager image, or the like. When the main service processor 310 is started, the three program software may be loaded into a memory of the main service processor 310, for example, a random access memory (random access memory, RAM). The RAM may be a dynamic random access memory (dynamic random access memory, DRAM), a static random access memory (static random access memory, SRAM), or the like. When the main service processor 310 interacts with the HRoT 320, instructions of the three program software are executed inside a CPU of the main service processor 310. The HRoT driver TEE program software receives and sends an instruction from and to the HRoT 320 through an interface of the main service processor 310.

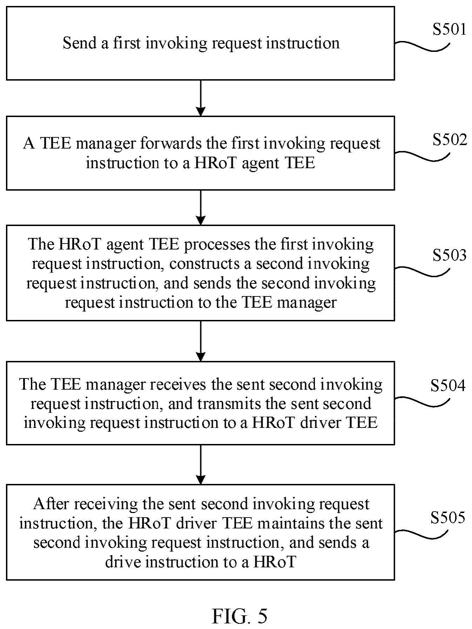

FIG. 5 is a flowchart of a hardware root of trust agent interaction method based on secure virtualization according to an embodiment of this application. As shown in FIG. 5, the method is executed by *a* main service processor 310, and a specific implementation process is as follows.

Step S501: Initiate a first invoking request instruction, where the first invoking request instruction is a request for the main service processor to invoke a HRoT.

In this application, a program such as an APP or an OS of a normal world of the main service processor may initiate the first invoking request instruction. Another TEE of a secure world of the main service processor may initiate the first invoking request instruction. A program such as a TA or a TEE OS in another TEE of the secure world of the main service processor initiates the first invoking request instruction.

Step S502: A TEE manager forwards the first invoking request instruction to a HRoT agent TEE.

Step S503: The HRoT agent TEE processes the first invoking request instruction, constructs and sends a second invoking request instruction, and sends the second invoking request instruction to the TEE manager, where the second invoking request instruction is a HRoT invoking request instruction that is identifiable by the HRoT agent TEE.

Step S504: The TEE manager receives the sent second invoking request instruction, and transmits the sent second invoking request instruction to a HRoT driver TEE.

Step S505: After receiving the sent second invoking request instruction, the HRoT driver TEE maintains the sent second invoking request instruction, and sends a drive instruction to the HRoT 320, where the drive instruction instructs the HRoT 320 to perform an operation, for example, cryptographic operation, key certificate management, or secret information storage.

The following describes technical solutions protected in this application by using an architecture of an HSM agent interaction solution based on Arm secure-exception level 2 (secure-exception level, S-EL2) secure virtualization as an example. It may be figured out that this application is not limited to this scenario, and there may be another application scenario.

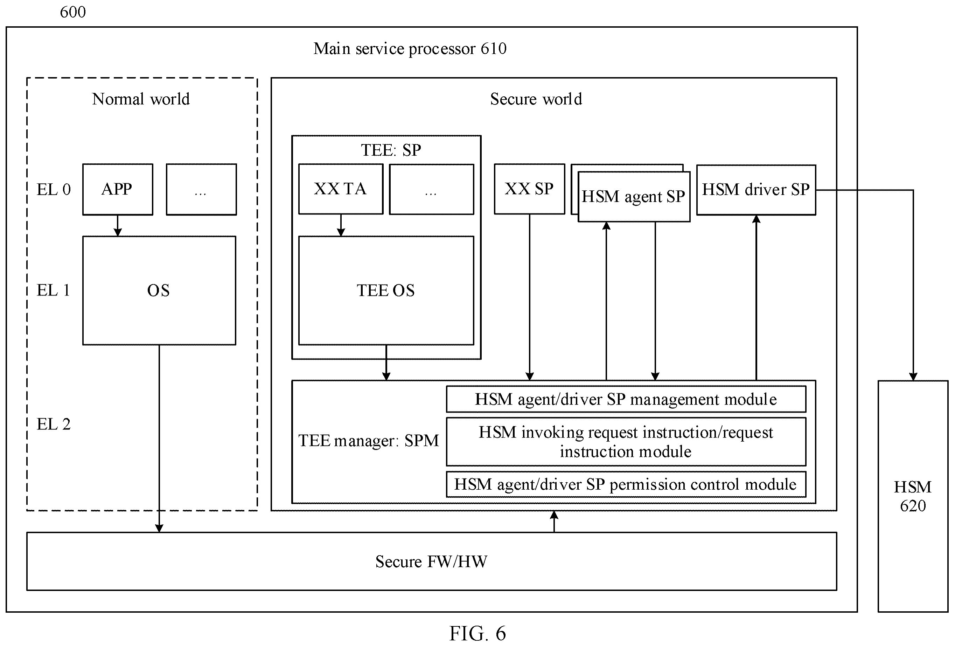

FIG. 6 is a diagram of an architecture of a network device in an Arm S-EL2 secure virtualization system according to an embodiment of this application. As shown in FIG. 6, the network device 600 is an Arm S-EL2-based secure virtualization system. The network device 600 includes a main service processor 610 and an HSM 620. Privilege levels PL 0, PL 1 and PL 2 of the main service processor 610 correspond to exception levels (exception levels, ELs) EL 0, EL 1 and EL 2 respectively. A TEE manager is deployed at the secure EL 2, and is referred to as a secure partition manager (secure partition manager, SPM). The SPM may support deployment of a plurality of TEEs, each of which is referred to as a secure partition (secure partition, SP). An HSM agent is constructed as a program (for example, in a form of FW) that is managed by the SPM and that is run in an independent SP environment, and is referred to as an HSM agent SP. The HSM agent SP does not depend on a TEE OS. An HSM driver is constructed as a program (for example, in a form of FW) that is managed by the SPM and that is run in an independent SP environment, and is referred to as an HSM driver SP. The SPM includes an HSM invoking request message/request command forwarding module, an HSM agent SP/HSM driver SP management module, and an HSM agent SP/HSM driver SP permission control module.

A program for sending an HSM invoking request instruction may include a program such as an APP and an OS of a normal world, another TEE of a secure world, a TA and a TEE OS in another TEE of the secure world, and other programs. The program for sending the HSM invoking request instruction is responsible for sending the HSM invoking request instruction to the HSM agent SP. The HSM invoking request instruction may include a requested operation identifier. The operation identifier indicates which operation is requested by the main service server for the HSM.

The HSM agent SP may receive the HSM invoking request instruction, and check legality or permission of the HSM invoking request instruction. When checking the legality or the permission of the HSM invoking request instruction, the HSM agent SP may construct an HSM invoking request instruction that is of a specific data structure and that is identifiable by an HSM driver, and send the HSM invoking request instruction that is identifiable. The HSM agent SP checks the legality or the permission of the HSM invoking request instruction. This may prevent a program of the normal world from sending an illegal HSM operation request, for example, reading a key. A privilege level of the HSM agent SP may be an EL 0, an EL 1, or another privilege level.

The HSM driver SP may receive HSM invoking request instructions that are identifiable, maintain a queue of the HSM invoking request instructions that are identifiable, and send a drive instruction to the HSM based on the queue. A privilege level of the HSM agent SP may be an EL 0, an EL 1, or another privilege level.

The SPM may include an HSM invoking request instruction/invoking request instruction forwarding module, an HSM agent SP/HSM driver SP management module, and an HSM agent SP/HSM driver SP permission control module.

The HSM invoking request instruction/request instruction forwarding module may receive an HSM invoking request instruction from a program such as an APP or an OS of the normal world, an SP of the secure world, a TA or a TEE OS in the SP, and other programs.

The HSM invoking request instruction/request instruction forwarding module may send the HSM invoking request instruction to the HSM agent SP. The HSM invoking request instruction/request instruction forwarding module may receive the HSM invoking request instruction from the HSM agent SP. The HSM invoking request instruction/request instruction forwarding module may send the HSM invoking request instruction to the HSM driver SP.

The HSM agent SP/HSM driver SP management module may manage lifecycles of the HSM agent SP and the HSM driver SP, such as initialization, interruption, recovery, or stopping.

The HSM agent SP/HSM driver SP permission control module may manage and control address space access permission of the HSM agent SP and the HSM driver SP, for example, control the address space access permission by configuring access permission attributes in page tables of the HSM agent SP and the HSM driver SP.

The HSM 620 may receive the drive command from the HSM driver SP, and perform a requested operation or the like based on the command.

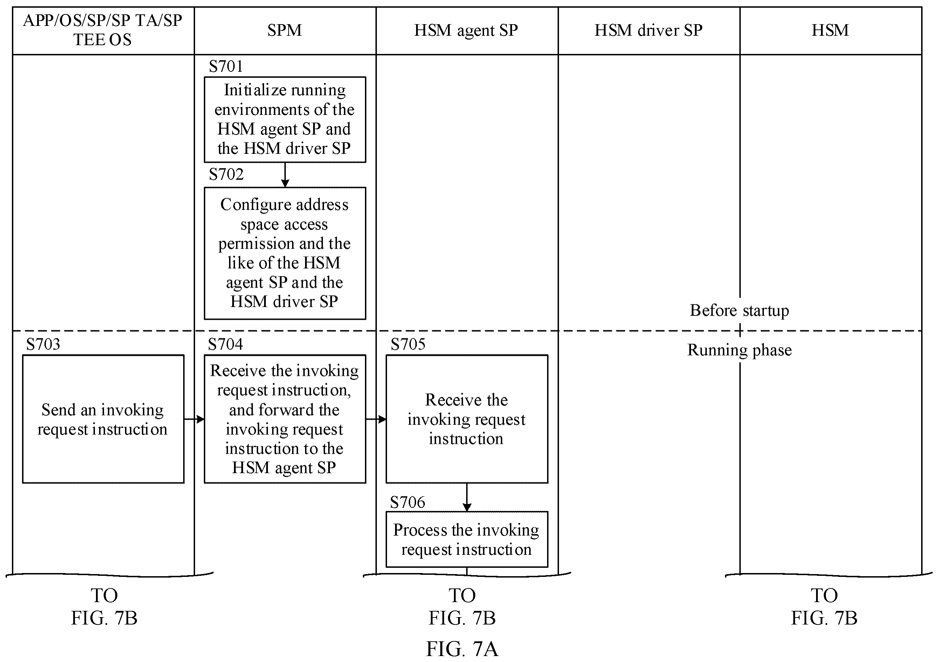

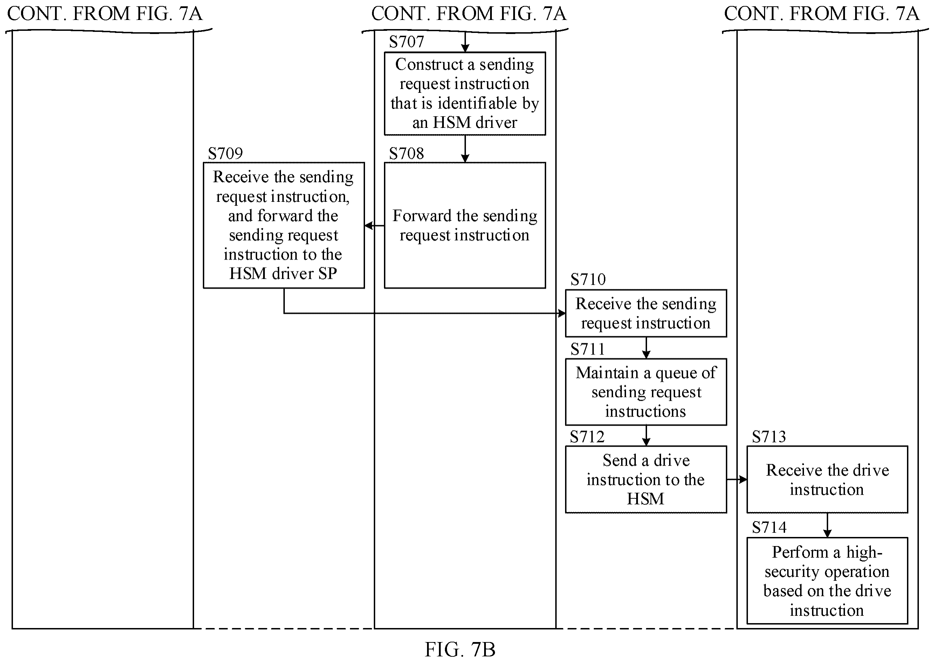

FIG. 7A and FIG. 7B are a flowchart of performing a hardware root of trust agent interaction method based on secure virtualization by a network device according to an embodiment of this application. As shown in FIG. 7A and FIG. 7B, before a main service processor 610 of a network device 600 is started, a specific process executed by the main service processor 610 is as follows.

Step S701: An SPM initializes running environments of an HSM agent SP and an HSM driver SP.

An HSM agent SP/HSM driver SP management module of the SPM initializes the running environments of the HSM agent SP and the HSM driver SP and manages lifecycles of the HSM agent SP and the HSM driver SP, such as initialization, interruption, recovery, or stopping. The SPM may configure program entries of the HSM agent SP and the HSM driver SP, create a data structure for managing the SP, and the like.

Step S702: The SPM configures address space access permission of the HSM agent SP and the HSM driver SP.

An HSM agent SP/HSM driver SP permission control module of the SPM manages and controls the address space access permission of the HSM agent SP and the HSM driver SP, for example, controls the address space access permission by configuring access permission attributes in page tables of the HSM agent SP and the HSM driver SP. In an embodiment, the SPM configures the address space access permission of the HSM agent SP and the HSM driver SP based on attributes in Stage 2 page tables of the HSM agent SP and the HSM driver SP. The SPM may control the address space access permission of the HSM agent SP and the HSM driver SP to prevent excessive permission of the HSM agent SP and the HSM driver SP.

When the main service processor 610 of the network device 600 runs, a specific process executed by the main service processor 610 is as follows.

Step S703: The main service processor 610 sends an HSM invoking request instruction.

A program such as an APP or an OS of a normal world of the main service processor 610 may initiate the HSM invoking request instruction. Another TEE of a secure world of the main service processor 610 may initiate the HSM invoking request instruction. A program such as a TA or a TEE OS in another TEE of the secure world of the main service processor 610 initiates the HSM invoking request instruction.

Step S704: The SPM receives the HSM invoking request instruction, and forwards the HSM invoking request instruction to the HSM agent SP.

Step S705: The HSM agent SP receives the HSM invoking request instruction.

Step S706: The HSM agent SP processes the HSM invoking request instruction.

Step S707: The HSM agent SP constructs an HSM invoking request instruction that is identifiable by an HSM driver.

Step S708: The HSM driver SP sends the HSM invoking request instruction that is identifiable to the SPM.

Step S709: The SPM receives the HSM invoking request instruction that is identifiable, and forwards the HSM invoking request instruction that is identifiable to the HSM driver SP.

Step S710: The HSM driver SP receives the HSM invoking request instruction that is identifiable.

Step S711: The HSM driver SP maintains a queue of HSM invoking request instructions that are identifiable.

Step S712: The HSM driver SP generates a drive instruction based on the HSM invoking request instruction that is identifiable, and sends the drive instruction to an HSM 620.

Step S713: The HSM 620 receives the drive instruction.

Step S714: The HSM 620 performs a high-security operation based on the drive instruction.

In this embodiment of this application, a trusted base of the HSM agent SP does not include a TEE OS, so that the trusted base of the HSM agent SP has a small code scale, a small attack surface, and high security. The HSM agent SP and the HSM do not need to be bound with the TEE OS for delivery, deployment, and authentication. This can reduce costs of the HSM agent SP and the HSM and make the deployment more flexible. The HSM driver SP is isolated from another component. Permission is strictly controlled by the SPM to minimize the permission. When the HSM driver SP has vulnerabilities or is attacked, a security threat is not posed to another component in a system, and security is high.

The following describes the technical solutions protected in this application by using an architecture of an HSM agent interaction solution based on Intel trusted domain extension (trusted domain extension, TDX) secure virtualization as an example. It may be figured out that this application is not limited to this scenario, and there may be another application scenario.

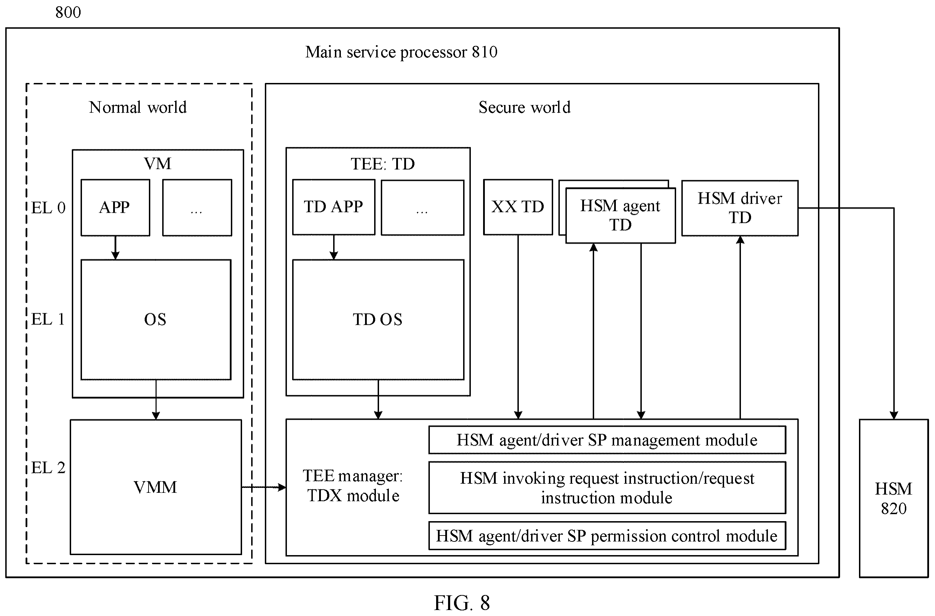

FIG. 8 is a diagram of an architecture of a network device in an Intel TDX secure virtualization system according to an embodiment of this application. As shown in FIG. 8, the network device 800 is an Intel TDX-based secure virtualization system. The network device 800 includes a main service processor 810 and an HSM 820. A normal world of the main service processor 810 supports running of a plurality of non-secure VMs. The VMs are managed by a virtual machine manager (virtual machine manager, VMM) in a hypervisor mode. A secure world of the main service processor 810 supports running of a plurality of secure trusted domains (trusted domains, TDs). The TDs are managed by a TDX module. A TD OS and TD APPs can be run on the TD. The TDX module runs in a newly introduced privilege mode Secure-Arbitration Mode (SEAM-Mode).

Compared with an Arm S-EL2 secure virtualization system, an HSM agent is constructed as an independent TD (for example, in a form of FW) in the Intel TDX secure virtualization system, and may be referred to as an HSM agent TD. An HSM driver is constructed as an independent TD (for example, in a form of FW) in the Intel TDX secure virtualization system, and may be referred to as an HSM driver TD. The TDX module includes an HSM invoking request message/invoking request instruction forwarding module, an HSM agent TD/HSM driver TD management module, and an HSM agent TD/HSM driver TD permission control module.

In this embodiment of this application, trusted base code of a HRoT agent does not include a TEE OS, and a lightweight TEE manager is used as a trusted base, so that a scale of the trusted base is reduced. The trusted base of the HRoT agent has a small code scale, a small attack surface, and high security. The HRoT agent does not depend on the TEE OS, and is managed by a TEE manager. The HRoT agent and the HRoT do not need to be bound with the TEE OS for delivery, deployment, and authentication. This can reduce costs and make a deployment mode more flexible. The HRoT driver may be constructed as an independent TEE to implement isolation from another component. A HRoT driver TEE is isolated from a manager TEE manager of the HRoT driver TEE at a privilege level. The TEE manager manages and controls permission of the HRoT driver TEE, for example, address space access permission. A HRoT has only permission granted by the TEE manager, and does not pose a threat to another component due to excessive permission. The HRoT driver has minimum permission, and is isolated from another component in a system. This ensures that a security threat is not posed to the another component in the system when the HRoT driver has its own vulnerabilities or is attacked.

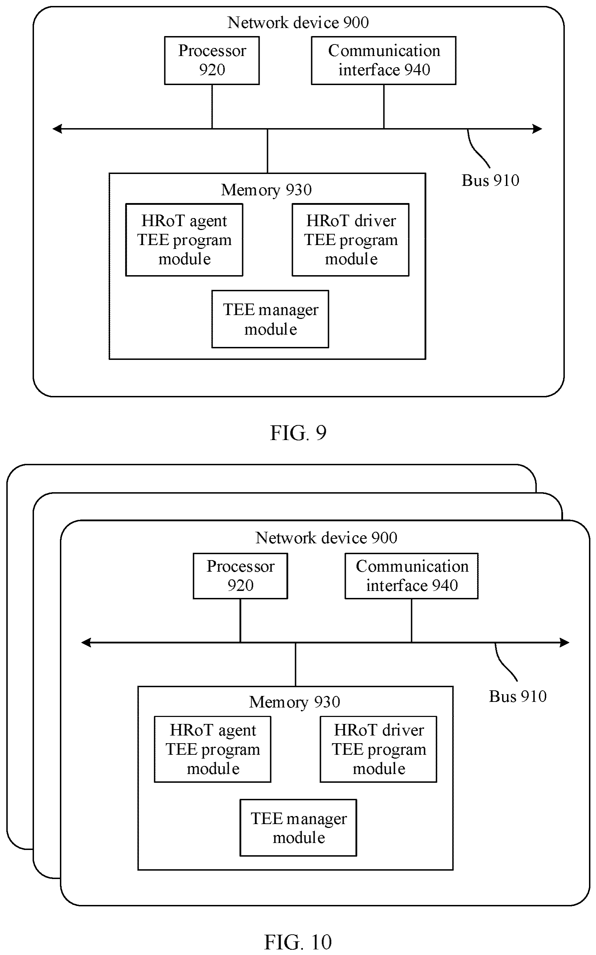

FIG. 9 is a diagram of a structure of a network device according to an embodiment of this application. As shown in FIG. 9, the network device 900 includes a bus 910, a processor 920, a memory 930, and a communication interface 940. The processor 920, the memory 930, and the communication interface 940 communicate with each other through the bus 910. The network device 900 may be a server or a terminal device. It should be understood that a quantity of processors and a quantity of memories in the network device 900 are not limited in this application.

The bus 910 may be a peripheral component interconnect (peripheral component interconnect, PCI) bus, an extended industry standard architecture (extended industry standard architecture, EISA) bus, or the like. The bus 910 may be classified into an address bus, a data bus, a control bus, and the like. For ease of representation, only one line is used in FIG. 9 for representation, but it does not indicate that there is only one bus or only one type of bus. The bus 910 may include a path for transmitting information between components (for example, the processor 920, the memory 930, and the communication interface 940) of the network device 900.

The processor 920 may include any one or more of processors such as a CPU, a graphics processing unit (graphics processing unit, GPU), a microprocessor (micro-processor, MP), or a digital signal processor (digital signal processor, DSP).

The memory 930 may include a volatile memory (volatile memory), for example, a RAM. The processor 920 may further include a non-volatile memory, for example, a ROM, a flash memory, a hard disk drive (hard disk drive, HDD), or a solid-state drive (solid-state drive, SSD).

The memory 930 stores executable program code, and the processor 920 executes the executable program code to separately implement functions of a HRoT agent TEE program module, a HRoT driver TEE program module, and a TEE manager module, thereby implementing a hardware root of trust agent interaction method based on secure virtualization. In other words, the memory 930 stores instructions used for performing the hardware root of trust agent interaction method based on secure virtualization.

Alternatively, the memory 930 stores executable code, and the processor 920 executes the executable code to separately implement functions of the network device, thereby implementing a hardware root of trust agent interaction method based on secure virtualization. In other words, the memory 930 stores instructions used for performing the hardware root of trust agent interaction method based on secure virtualization.

The communication interface 940 uses a transceiver module, for example, but not limited to, a network interface card or a transceiver, to implement communication between the network device 900 and another device or a communication network.

An embodiment of this application further provides a data center. The data center includes at least one network device. The network device may be a server, for example, a central server, an edge server, or a local server in a local data center. In some embodiments, the network device may alternatively be a terminal device, for example, a desktop computer, a notebook computer, a smartphone, or a switch.

As shown in FIG. 10, the data center includes at least one network device 900. A memory 930 in one or more network devices 900 in the data center may store same instructions used for performing a hardware root of trust agent interaction method based on secure virtualization.

In some possible implementations, alternatively, the memory 930 in the one or more network devices 900 in the data center may separately store some instructions used for performing the hardware root of trust agent interaction method based on secure virtualization. In other words, a combination of the one or more network devices 900 may jointly execute instructions used for performing the hardware root of trust agent interaction method based on secure virtualization.

It should be noted that memories 930 in different network devices 900 in the data center may store different instructions, and the different instructions are separately used for executing some functions of the network device. In other words, instructions stored in the memories 930 in the different network devices 900 may implement functions of one or more modules of a HRoT agent TEE program module, a HRoT driver TEE program module, and a TEE manager module.

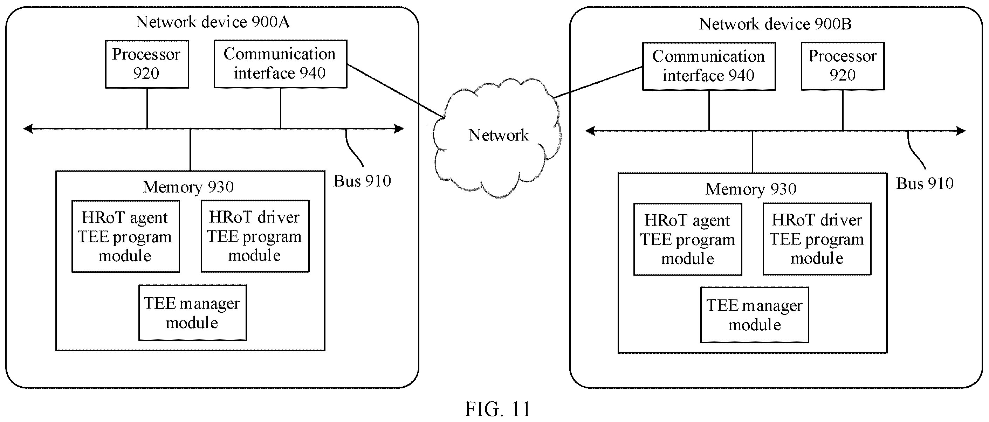

In some possible implementations, the one or more network devices 900 in the data center may be connected through a network. The network may be a wide area network, a local area network, or the like. FIG. 11 shows a possible implementation. As shown in FIG. 11, a network device 900A and a network device 900B are connected through a network. Specifically, each network device is connected to the network through a communication interface in the network device. In this possible implementation, a memory 930 in the network device 900A stores instructions for executing a function of an HCQ selector 2202. In addition, a memory 930 in the network device 900B stores instructions for executing functions of a module corresponding to a HRoT agent TEE program, a module corresponding to a HRoT driver TEE program, and a module corresponding to a TEE manager.

A connection manner in the data center shown in FIG. 11 may consider that a large amount of storage data is required in the hardware root of trust agent interaction method based on secure virtualization provided in this application. Therefore, it is considered that functions implemented by the module corresponding to the HRoT agent TEE program, the module corresponding to the HRoT driver TEE program, and the module corresponding to the TEE manager are executed by the network device 900B.

It should be understood that a function of the network device 900A shown in FIG. 11 may alternatively be completed by a plurality of network devices 900. Similarly, a function of the network device 900B may alternatively be completed by a plurality of network devices 900.

An embodiment of this application further provides another data center. For a connection relationship between network devices in the data center, refer to the connection manners of the data centers in FIG. 10 and FIG. 11. A difference is that the memory 930 in the one or more network devices 900 in the data center may store same instructions used for performing the hardware root of trust agent interaction method based on secure virtualization.

In some possible implementations, alternatively, the memory 930 in the one or more network devices 900 in the data center may separately store some instructions used for performing the hardware root of trust agent interaction method based on secure virtualization. In other words, a combination of the one or more network devices 900 may jointly execute instructions used for performing the hardware root of trust agent interaction method based on secure virtualization.

It should be noted that memories 930 in different network devices 900 in the data center may store different instructions, and the different instructions are used for executing some functions of the data center. In other words, the instructions stored in the memories 930 in the different network devices 900 may implement a function of one or more apparatuses in the network device.

An embodiment of this application further provides a computer program product including instructions. The computer program product may be software or a program product that includes instructions and that can run on a network device or be stored in any usable medium. When the computer program product runs on at least one network device, the at least one network device is enabled to perform a hardware root of trust agent interaction method based on secure virtualization.

An embodiment of this application further provides a computer-readable storage medium. The computer-readable storage medium may be any usable medium that can be stored by a network device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the network device to perform a hardware root of trust agent interaction method based on secure virtualization.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A hardware root of trust agent interaction method based on secure virtualization, wherein the method is performed by a network device, the network device comprises a main service processor and a hardware root of trust, the main service processor comprises a hardware root of trust agent program, a hardware root of trust driver program, and a trusted execution environment manager, and the method comprises:
receiving, by the trusted execution environment manager, a first invoking request instruction, and forwarding the first invoking request instruction to the hardware root of trust agent program, wherein the first invoking request instruction is used to invoke the hardware root of trust, and the trusted execution environment manager is configured to manage the hardware root of trust agent program and the hardware root of trust driver program;
constructing, by the hardware root of trust agent program, a second invoking request instruction based on the first invoking request instruction, and forwarding the second invoking request instruction to the hardware root of trust driver program, wherein the second invoking request instruction is an instruction that is of a specific data structure and that is identifiable by the hardware root of trust driver program; and
sending, by the hardware root of trust driver program, a drive instruction to the hardware root of trust based on the second invoking request instruction, wherein the drive instruction instructs the hardware root of trust to perform a high-security operation.

2. The method according to claim 1, wherein before receiving, by the trusted execution environment manager, the first invoking request instruction, and forwarding the first invoking request instruction to the hardware root of trust agent program, the method further comprises:
generating, by an application and/or an operating system of a normal world of the main service processor, the first invoking request instruction, and sending the first invoking request instruction to the trusted execution environment manager; and/or
generating, by a trusted program of a secure world of the main service processor, the first invoking request instruction, and sending the first invoking request instruction to the trusted execution environment manager.

3. The method according to claim 1 or 2, wherein constructing, by the hardware root of trust agent program, the second invoking request instruction based on the first invoking request instruction specifically comprises:
detecting, by the hardware root of trust agent program, legality of the first invoking request instruction; and
in response to that the first invoking request instruction is a legal instruction, constructing, by the hardware root of trust agent program, the second invoking request instruction based on the first invoking request instruction.

4. The method according to any one of claims 1 to 3, wherein sending, by the hardware root of trust driver program, the drive instruction to the hardware root of trust based on the second invoking request instruction specifically comprises:
receiving, by the hardware root of trust driver program, the second invoking request instruction, and transmitting the second invoking request instruction to a queue of an output port of the hardware root of trust driver program; and
when determining that the second invoking request instruction is output in the queue of the output port, forwarding, by the hardware root of trust driver program, the drive instruction corresponding to the second invoking request instruction.

5. The method according to any one of claims 1 to 4, wherein the hardware root of trust agent program is an independent trusted execution environment program managed by the trusted execution environment manager.

6. The method according to any one of claims 1 to 5, wherein the hardware root of trust driver program is an independent trusted execution environment program managed by the trusted execution environment manager.

7. A network device, comprising a main service processor and a hardware root of trust, wherein the main service processor comprises a hardware root of trust agent program, a hardware root of trust driver program, and a trusted execution environment manager;
the trusted execution environment manager is configured to: receive a first invoking request instruction, and forward the first invoking request instruction to the hardware root of trust agent program, wherein the first invoking request instruction is used to invoke the hardware root of trust, and the trusted execution environment manager is configured to manage the hardware root of trust agent program and the hardware root of trust driver program;
the hardware root of trust agent program is configured to: construct a second invoking request instruction based on the first invoking request instruction, and forward the second invoking request instruction to the hardware root of trust driver program, wherein the second invoking request instruction is an instruction that is of a specific data structure and that is identifiable by the hardware root of trust driver program; and
the hardware root of trust driver program is configured to send a drive instruction to the hardware root of trust based on the second invoking request instruction, wherein the drive instruction instructs the hardware root of trust to perform a high-security operation.

8. The network device according to claim 7, wherein the main service processor is configured to: send the first invoking request instruction generated by an application and/or an operating system of a normal world to the trusted execution environment manager; and/or
send the first invoking request instruction generated by a trusted program of a secure world to the trusted execution environment manager.

9. The network device according to claim 7 or 9, wherein the hardware root of trust agent program is specifically configured to: detect legality of the first invoking request instruction; and
in response to that the first invoking request instruction is a legal instruction, construct the second invoking request instruction based on the first invoking request instruction.

10. The network device according to any one of claims 7 to 9, wherein the hardware root of trust driver program is specifically configured to: receive the second invoking request instruction, and transmit the second invoking request instruction to a queue of an output port of the hardware root of trust driver program; and
when determining that the second invoking request instruction is output in the queue of the output port, forward the drive instruction corresponding to the second invoking request instruction.

11. The network device according to any one of claims 7 to 10, wherein the hardware root of trust agent program is an independent trusted execution environment program managed by the trusted execution environment manager.

12. The network device according to any one of claims 7 to 11, wherein the hardware root of trust driver program is an independent trusted execution environment program managed by the trusted execution environment manager.

13. A network device, comprising a main service processor and a hardware security module, wherein the main service processor is used in a secure virtualization system at a secure-exception level 2, and the main service processor comprises a hardware security module agent program, a hardware security module driver program, and a secure partition manager;
the secure partition manager is configured to: receive a first invoking request instruction, and forward the first invoking request instruction to the hardware security module agent program, wherein the first invoking request instruction is used to invoke the hardware security module, and the secure partition manager is configured to manage the hardware security module agent program and the hardware security module driver program;
the hardware security module agent program is configured to: construct a second invoking request instruction based on the first invoking request instruction, and forward the second invoking request instruction to the hardware security module driver program, wherein the second invoking request instruction is an instruction that is of a specific data structure and that is identifiable by the hardware security module driver program; and
the hardware security module driver program is configured to send a drive instruction to the hardware security module based on the second invoking request instruction, wherein the drive instruction instructs the hardware security module to perform a high-security operation.

14. A network device, comprising a main service processor and a hardware security module, wherein the main service processor is used in a trusted domain extension secure virtualization system, and the main service processor comprises a hardware security module agent program, a hardware security module driver program, and a trusted domain extension module;
the trusted domain extension module is configured to: receive a first invoking request instruction, and forward the first invoking request instruction to the hardware security module agent program, wherein the first invoking request instruction is used to invoke the hardware security module, and the trusted domain extension module is configured to manage the hardware security module agent program and the hardware security module driver program;
the hardware security module agent program is configured to: construct a second invoking request instruction based on the first invoking request instruction, and forward the second invoking request instruction to the hardware security module driver program, wherein the second invoking request instruction is an instruction that is of a specific data structure and that is identifiable by the hardware security module driver program; and
the hardware security module driver program is configured to send a drive instruction to the hardware security module based on the second invoking request instruction, wherein the drive instruction instructs the hardware security module to perform a high-security operation.

15. A network device, comprising:
at least one memory; and
at least one processor, wherein the at least one processor is configured to execute instructions stored in the at least one memory, so that the processor performs the method according to any one of claims 1 to 6.
